# EUROPÄISCHE PATENTSCHRIFT

(11) **EP 3 057 918 B1**
(45) Veröffentlichungstag und Bekanntmachung des Hinweises auf die Patenterteilung: **11.05.2022**
(21) Anmeldenummer: 14799543.5
(22) Anmeldetag: 10.10.2014
(51) Int. Cl.: C04B 28/04, C04B 26/02, C04B 28/02, C04B 38/02, C04B 111/00

(54) **MÖRTELMISCHUNG ALS BRANDSCHUTZ IN FORM EINES OBERPUTZES, VERFAHREN ZU IHRER HERSTELLUNG UND VERWENDUNG**
MORTAR MIXTURE AS FIRE PROTECTION FOR FINISHING PLASTER, METHODS FOR THE PRODUCTION AND USE THEREOF
MÉLANGE DE MORTIER SERVANT DE PROTECTION CONTRE L'INCENDIE POUR UN ENDUIT DE FINITION, PROCÉDÉ DE PRODUCTION ET UTILISATION DUDIT MÉLANGE

(30) Priorität: 14.10.2013 CH 17522013; 24.04.2014 CH 6222014; 11.07.2014 CH 10582014
(43) Veröffentlichungstag der Anmeldung: 24.08.2016
(73) Patentinhaber: ADT Aero Dämm Technik GmbH, 79379 Müllheim (DE)
(72) Erfinder: MAIER, Martin, 79258 Hartheim-Bremgarten (DE)
(74) Vertreter: Felber, Josef
(86) Internationale Anmeldenummer: PCT/IB2014/065203
(87) Internationale Veröffentlichungsnummer: WO 2015/056139

(56) Entgegenhaltungen:
- EP-A1- 0 839 774
- EP-A1- 0 990 628
- EP-A1- 1 593 659
- WO-A1-2012/007057
- CN-A- 101 684 671
- CN-A- 102 173 680
- DE-A1- 2 341 684
- DE-A1- 19 540 273
- DE-A1-102005 040 091
- DE-A1-102010 044 466
- DE-A1-102010 047 673
- DE-B1- 1 671 159
- DE-U1- 29 624 407
- DE-U1-202004 021 414
- FR-A- 1 547 991
- FR-A1- 2 809 019
- US-A- 3 617 321
- US-A- 4 086 098
- US-A- 5 114 617
- US-A- 5 294 255
- US-A- 6 103 003
- US-A1- 2003 055 147
- None

## Beschreibung

Diese Erfindung betrifft eine spezielle Mörtelmischung, die als Oberputz an Gebäuden einsetzbar ist. Die Erfindung betrifft auch das Verfahren zur Herstellung dieser Mörtelmischung sowie ihre Verwendung als Oberputz.

Das Wesentliche an dieser Mörtelmischung ist es, dass sie teilweise oder vollständig aus ganz speziellen Leichtbaustoffen anstelle von traditionellen Sanden besteht. Sie kann an einem Bauwerk eingesetzt werden, an welchem Aussen- oder Innenwände oder Decken oder Bodenplatten damit neu erstellt oder nachträglich saniert werden.

Im Neubau sowie in der Sanierung werden heute zur Verbesserung der Wärmedämmung oder aus Brandschutzgründen sowie um Gewicht einzusparen verschiedene Leichtbaustoffe wie Blähton, offenzellige Perlite, Glaskugeln, Styropor (EPS) und andere Stoffe verwendet. Diese Leichtbaustoffe haben verschiedene Nachteile:
- Offenzellige Perlite haben eine tiefe Druckfestigkeit <0.2 N/mm² und sind stark saugfähig für Wasser.
- Glaskugeln sind sehr abrasiv und entsprechend problematisch im Handling, etwa zum Mischen oder zum Pumpen. Zusätzlich sind die Produkte sehr teuer.
- EPS (Styropor) ist dampfdicht und nicht hitzebeständig. Im Brandfall entfacht EPS das Feuer zusätzlich infolge seiner Energieabgabe. EPS muss ausserdem als Sondermüll entsorgt werden.

Die Entwicklung effizienter Leichtbaustoffe mit einem guten Isolationswert, einem hohen Brandschutzwert, welcher zudem ein angenehmes Raumklima bewirkt, da er nur wenig Wasser aufsaugt, jedoch wasserdampfdurchlässig ist und rein mineralisch ist und somit natürlich abbaubar ist, stellt eine grosse Herausforderung dar. Heute werden Leichtbaustoffe auf EPS Basis dem Verputz beigemischt. EPS ist jedoch nicht brandbeständig. Als Brandschutzmassnahmen werden Steinwolle oder Spezialprodukte aus Blähton oder Blähglimmer usw. eingesetzt. Steinwolle hält jedoch einer Druckbelastung nicht stand. Brandschutzplatten aus Blähton oder Blähglimmer sind sehr teuer. Der Referenzwert für die Isolation ist der Wärmedurchlass und dieser wird als Lambdawert (λ) ausgedrückt. Je tiefer dieser Wert, umso besser ist die Wärmeisolation. Mörtel oder Platten aus EPS haben einen A Wert von 35 mW/mK, Steinwolle hat einen Lambdawert von 50 - 70 mW/mK. Für Aerogel Putze werden Lambdawerte von 12 - 15 mW/mK angegeben. Solch tiefe Lambdawerte für Aerogel sind aber reine Laborwerte. In der Praxis wird sich der Lambdawert in der Mörtelmischung nach dem Misch- und Pumpvorgang auf der Baustelle erhöhen, weil Aerogel durch den Misch- und Pumpvorgang mechanisch gestresst wird. Das Gleiche gilt für eine Mörtelmischung aus EPS-Kügelchen oder traditionellem offenzelligen Perlit, welcher eine Druckspannung bei 10% Stauchung von <0.2 N/mm² aushält. Mörtelmischungen aus solchen Leichtbaustoffen mit tiefer Druckfestigkeit können auch nicht in Bodenbereichen eingesetzt werden, wo eine bestimmte Druckfestigkeit immer verlangt wird. Andere Leichtbaustoffe wie Glaskugeln sind sehr teuer und führen zusätzlich zu sehr hohem Verschleiss im Mischer, in der Pumpe sowie in den Transportschläuchen und sie werden aus diesem Grund in der Bauindustrie nur beschränkt eingesetzt.

Ein besonderes Thema sind Altbauten und deren Sanierung. Altbauten sind zwar oftmals schön - manchmal eigentliche Baudenkmäler - aber sie weisen meist eine schlecht isolierende Bauhülle auf und sind allgemein schwer nachträglich zu isolieren. Die Entwicklung effizienter Isoliersysteme, etwa eines gut isolierenden Oberputzes oder gut isolierender Dämmplatten ist daher auch für diesen Einsatz eine Herausforderung. Aus Brandschutzgründen sollten Dämmplatten aus extrudiertem Polystyrol (EPS) oder Stypropor zusätzlich vor Hitzeeinwirkung geschützt werden.

In der Schweiz als Beispiel gibt es etwa 1.5 Millionen Altbauten. Mit dieser Bausubstanz muss gelebt werden, ja man will sie oft bewusst erhalten. Doch zugleich steigt der Energieverbrauch des Landes. 4.5 Millionen Tonnen leichtes Heizöl und 3 Millionen Kubikmeter Erdgas werden laut dem Schweizer Bundesamt für Energie jährlich importiert. 43 Prozent davon werden für das Heizen von Gebäuden verbrannt. Um sparsamer mit diesen Energieträgern umzugehen, führt kein Weg um eine bessere Isolation dieser alten Häuser herum. Das Gleiche gilt für viele andere Länder.

Wie dämmt man aber einen historischen Altbau - sei es nun ein Riegelhaus, ein Haus aus der Art-Deco-Epoche oder ein altes Bürgerhaus? Der Heimatschutz erlaubt es nicht, historische Fassaden einfach mit modernen Dämmplatten einzupacken.

Um die Optik einer alten Hauswand zu erhalten, eignet sich daher ein Verputz am besten. Auch das Auskleiden von verwinkelten Treppenhäusern, Rundbögen und Stützmauern ist mit herkömmlichen dicken Dämmplatten zuweilen aufwändig. Eine Verkleidung aus Dämmputz lässt sich besonders an verwinkelten Bereichen entschieden einfacher anbringen. Ausserdem liegt der Putz direkt auf dem Mauerwerk auf und lässt keine Lücken frei, in denen Feuchtigkeit kondensieren kann. In der Praxis greift man deshalb oft auf Kombinationen von Dämmplatten und Dämmputzen zurück. Grosse, ebene Flächen werden mit Dämmplatten verkleidet, verwinkelte Bereiche des Baukörpers hingegen mit Dämmputz versehen. Für die Reprofilierung resp. für das Ausgleichen von horizontalen Flächen im Alt- sowie Neubau eignen sich grundsätzlich leichte Mörtel. Damit kann Gewicht gespart werden. Diese Ausgleichsmörtel können auch selbstnivellierend eingestellt sein. Wichtig ist, dass diese Mörtel nur wenig Wasser aufsaugen. Unter diesen Umständen ist der Wasserbedarf gering und die Abbindezeit entsprechend kurz. Dies beschleunigt den Baufortschritt. Damit das Raumklima optimal wird, sollten die Mörtel, welche auf Böden resp. Wände aufgebracht werden, dampfdurchlässig sein. Andernfalls besteht die Gefahr, falls ungenügend gelüftet wird, dass sich Schimmel bildet.

Einer der besten, wenn nicht der allerbeste Dämmstoff, der industriell hergestellt werden kann, ist Aerogel. Das Material, wegen seiner Optik auch als «gefrorener Rauch» bekannt, besteht zu rund 5 Prozent aus Silikat - der Rest ist Luft. Aerogel wurde bereits in den Sechzigerjahren zur Isolation von Raumanzügen eingesetzt und brachte es auf 15 Einträge im Guinness-Buch der Rekorde, darunter denjenigen als «bester Isolator» und «leichtester Feststoff». Im Baubereich wird Aerogel bereits eingesetzt, etwa als einblasbarer Isolierstoff für Mauer-Zwischenräume oder in Form von Dämmplatten aus Faserflies. Tatsächlich sind Aerogel-Kügelchen extrem leicht, fast gewichtslos und sie lassen sich zwischen Daumen und Zeigefinger festhalten. Doch sobald man die Finger reibt, zerbröseln sie. Nach zwei, drei Bewegungen ist nur noch ein feines Pulver übrig. Wenn das Pulver sachte mit Wasser angerührt wird und der damit versetzte Putz von Hand aufgetragen wird, lassen sich zwar gute Ergebnisse erzielen. Aber wenn der Putz mit einem Druck von 7 bis 8 bar durch den Schlauch einer professionellen Verputzmaschine gepumpt wird, so zerstört die mechanische Beanspruchung den Aerogel und seine isolierende Wirkung. Aerogel müsste daher in so einer Weise in den Putz integriert werden, dass seine Wirkung auch beim maschinellen Pumpen des Dämmputzes erhalten bleibt. Laborproben dieses von der Eidgenössischen Material-Prüfungs-Anstalt EMPA in CH-Dübendorf entwickelten Aerogel-Putzes ergaben eine Wärmeleitfähigkeit A von 30 mW/mK. Damit wäre dieser Aerogel-Dämmputz mehr als doppelt so gut isolierend wie ein herkömmlicher Dämmputz und vergleichbar oder gar noch besser isolierend als eine Platte aus extrudiertem Polystyrol (EPS). Die herkömmlichen Dämmputze weisen Lambda-Werte zwischen 65 und 90 mW/mK auf, die schlechtesten bloss einen A-Wert von 110 oder 130 mW/mK. Zur praktischen Applikation wird der Aerogel-Dämmputz mit einer Verputzmaschine auf das Mauerwerk aufgespritzt und anschliessend glatt gezogen. Dieser weiche Dämmputz muss anschliessend in einem weiteren Arbeitsgang mit einem gewebearmierten Einbettmörtel geschützt werden. Es hat sich allerdings gezeigt, dass ein Aerogel als gepumpter Putz aufgebracht, deutlich mehr Wärme durchlässt, vor allem wenn die Pumpstrecke zu seinem Aufbringen lang war. Aufgrund der mechanischen Beanspruchung des Aerogels in der Pumpe fällt seine Wirkung zusammen und der Lambda-Wert steigt. Bei einer 30 Meter langen Pumpleitung steigt der Wärmedurchlass und somit der Lambda-Wert von 30 auf ca. 40 bis 45 mW/mK.

Bauwerke werden üblicherweise für eine Lebensdauer von 50 - 70 Jahre gebaut. Oft werden die Bauwerke nach diesem Zeitpunkt rückgebaut. Entsprechend ist es sinnvoll, nachhaltig zu bauen. Das heisst, es sollten erneuerbare oder rezyklierbare Rohmaterialien verwendet werden. Die Rohstoffe sollen umweltneutral sein und nicht auf EPS oder Polymer Basis bestehen, welche auf speziellen Deponien entsorgt werden müssen. Die hohen Kosten für die Entsorgung fliessen nämlich in die Baukosten mit ein.

Wärmedämmplatten andrerseits erleiden durch ihre Montage keine Verschlechterung ihres λ-Wertes. Eine Aerogel-Platte bringt einen λ-Wed von 15 bis 20 mW/mK, ist also besser als eine extrudierte Polystyrol Platte (EPS-Platte) mit ihrem λ-Wert von 33 mW/mK. Wenngleich nicht überall Wärmedämmplatten einsetzbar sind, so sind solche doch in vielen Situationen ideal, denn sie bieten einen tiefen λ-Wert. Aerogel-Platten oder Aerogel-Dämmputze sind im Allgemeinen sehr teuer. Könnte man einen Wärmedämmputz mit vergleichbaren λ-Werten einsetzen, so wäre ein solcher für sehr viele Anwendungen hoch interessant, denn Dämmputz lässt sich sehr bequem auch an verwinkelten Stellen eines Baukörpers aufbringen, durch einfaches Aufspritzen.

Mit traditionellen Leichtbaustoffen werden bereits heute Leichtbetone oder traditionelle Verputze oder Mörtel modifiziert. Diese Mörtelmischungen sind jedoch oftmals ungeeignet oder teuer. Saugfähige, stark hygroskopische Produkte neigen zu Schwindrissen in der Anfangsphase des Abbindeprozesses. Leichtbaustoffe aus EPS sind nicht brandbeständig. Das Gegenteil ist der Fall. Diese Produkte geben dem Brand zusätzliche Energie (Nahrung) und beschleunigen somit die Brandausweitung. Entsprechend sind in der Praxis oft zusätzliche Brandschutzmassnahmen beim Einsatz von EPS (Styropor) vorzusehen.

Ein ganz anderer Aspekt betrifft einen Oberputz. Als Oberputz werden üblicherweise Bindemittel auf Dispersionsbasis verwendet. Bisher sieht eine gebräuchliche Rezeptur für einen solchen Dispersionsputz wie folgt aus: ca. 90 Volumenprozente sind Sande vorzugsweise Silikatsande in unterschiedlichen Körnungen, gemischt zu einer idealen Siebelinie der Abmessung 0 bis 5 mm. Diese Sande weisen eine Dichte von ca. 1.9-2.2 kg/l auf. Ca. 10 Volumenprozente nimmt dann die Dispersion (Kleber) auf Wasserbasis ein. Bedarfsweise wird ein Zusatzmittel beigemengt, beispielsweise ein Schäumungsmittel und/oder noch andere Zusatzstoffe für die homogene Trocknung oder für die Tempierung. Solche Oberputze werden dann für die Ausführung der Verputzarbeiten meistens in 25kg-Kesseln angeliefert. Diese Kessel müssen bei einem Hochhaus über mehrere Stockwerke nach oben geschafft werden, was vielfach von Hand erfolgen muss und entsprechend mühsam ist. Je nach Typ des Sandes, ob mehr oder weniger saugfähig, penetriert ein Teil der Dispersion in den Sand. Das bedeutet, dass viel Dispersion notwendig ist und dadurch wird das System teuer. Die Sande absorbieren zusätzlich Wasser und dadurch steift der Oberputz schnell an. Entsprechend ist viel Personal auf der Baustelle notwendig, damit der Oberputz, bevor er ansteift, homogen appliziert werden kann. Andernfalls sind die Übergänge von Gerüstlauf zu Gerüstlauf schwer abzuglätten und später am Objekt in vielen Fällen sichtbar. Bekannt aus dem Dokument DE 102005040091 A1 ist ein Oberputz in pastöser Form enthaltend 4 - 15 Gew% Bindemittel (wässrige Polymerdispersion), 30 - 80 Gew% anorganische Füllstoffe (u.a. gelistet Quarzsand; 2 mm - 5 mm), 2- 10 Gew% Leichtfüllstoffe (u.a. gelistet expandierter Perlit, kugelförmig, 50 mm - 5 mm), 0,1 - 10 Gew% Additive, 6-18 Gew% Wasser. Im Anwendungsbeispiel 1 sind 16 Gew% Leichtfüllstoff (Schüttvolumen < 1kg/1) und 33,75 Gew% anorganischer Füllstoff (Schüttvolumen> 1 kg/l) enthalten; als Bindemittel dient eine Copolymerdispersion. Somit beträgt der Gewichtsanteil der Füllstoffe im pastösen Oberputz 49,75 Gew%. Das Dokument listet Polystyrol als organischen Leichtfüllstoff und Bims, expandierten Perlit, Blähglas, Hohlglaskugeln und CSH als mögliche anorganische Leichtfüllstoffe ohne dabei deren Dichte zu definieren. Das Dokument offenbart nicht die Druckfestigkeit von Bims und expandiertem Perlit. Das Dokument listet Karbonate, Silikate und Oxide und spezifiziert Kalzit, Dolomit, Quarz, Talkum, Kaolin, Glimmer und Kreide als mögliche Füllstoffe ohne deren Dichte zu definieren. Die Dokumente EP 1 593 659 A1, EP 0 839 774 A1, WO 2012/007057 A1 und DE 102010047673 A1 realisieren pumpfähige Putzmörtel durch hydrophobierten Blähperlit, durch Wahl von Schaumglas und Blähton, durch ungeblähten Perlit oder normalen Blähperlit.

Die Aufgabe dieser Erfindung ist es angesichts der oben erläuterten Sachverhalte, eine Mörtelmischung zu schaffen, die einsetzbar ist, wenigstens als Brandschutz in Form eines Oberputzes, wobei diese Mörtelmischung im Vergleich zu herkömmlichen Mörtelmischungen wesentlich leichter sein soll, bessere Wärmedämm- und Brandschutzeigenschaften aufweisen soll, kostengünstig herstellbar sein soll und eine leichtere Handhabung für die Applikation bieten soll, namentlich auch deshalb, weil sie bedarfweise auch trocken gefördert und gepumpt werden kann. Die Mörtelmischung soll ausserdem eine wesentliche höhere Druckfestigkeit als herkömmliche Mörtelmischungen bieten, die auf der Basis von offenzelligen Perliten hergestellt wurden. Die Mörtelmischung soll nicht hygroskopisch sondern nur leicht Wasser aufsaugen und entsprechend ein optimales Raumklima schaffen.

Desweiteren ist es eine Aufgabe der Erfindung, das Verfahren zur Herstellung einer solchen Mörtelmischung in verschiedenen spezifischen Zusammensetzungen anzugeben, nämlich für einen Oberputz, der ein sehr wesentlich geringeres Gewicht als herkömmliche Oberputze aufweist und daher viel einfacher und leichter homogen aufbringbar ist, und ausserdem als Brandschutz einsetzbar ist.

Ausserdem soll diese Mörtelmischung im Vergleich zu herkömmlichen Oberputzen kostengünstig herstellbar sein. Im Fall eines Oberputzes soll dieser wesentlich leichter und einfacher in der Handhabung sein als bisher bekannte Oberputze.

Schliesslich ist es eine Aufgabe der Erfindung, die Verwendung solcher Mörtelmischungen anzugeben, sei es als Oberputze zum Erzeugen homogener und applikationsleichter Aussenverputze, sei es zur Gewährleistung eines hinreichenden Brandschutzes. Schliesslich offenbart ist auch ein Bauwerk, in welchem derartige Mörtelmischungen als Oberputze, als Brandschutz verarbeitet sind. Die erfindungsgemässe Lösung der Aufgabe ist in den unabhängigen Ansprüchen 1, 4 und 7 definiert.

Die Mörtelmischung soll also möglichst leicht sein, einen vergleichbaren oder tieferen λ-Wert als herkömmliche Unter- oder Dämmputze bieten, und eine hohe Brandbeständigkeit aufweisen. Zusätzlich sollte diese Mörtelmischung eine solche Stabilität und Dauerhaftigkeit aufweisen, dass sie sich für das Verbauen auf Innen- und Aussenwänden sowie für Böden von Gebäuden eignet und auch dampfdurchlässig ist. Die Mörtelmischung sollte nur wenig Wasser aufsaugen und ein wesentlich geringeres Gewicht als traditionelle Mörtel aufweisen und daher viel einfacher und leichter homogen aufbringbar sein. Wird die Mörtelmischung als Reprofilier-, Ausgleichsmörtel verwendet oder als Giessmörtel in eine Schalung eingesetzt, sollte sie zusätzlich eine hohe Druckfestigkeit aufweisen.

Im Fall eines Oberputzes auf Dispersionsbasis soll dieser wesentlich leichter in der Handhabung sein als bisher bekannte Oberputze.

Diese Aufgabe wird gelöst von einer Mörtelmischung als Brandschutz für einen Oberputz, die sich *dadurch auszeichnet,* dass sie in Bezug auf ihr Volumen zu wenigstens 20% aus verglasten, geschlossenzelligen Kugeln aus expandiertem Silicasand bzw. geblähtem Perlit mit einer Druckfestigkeit von 0.7 - 6.0 N/mm² besteht, und das Restvolumen mindestens aus einem Bindemittel.

Diese Mörtelmischung für Verputze zeichnet sich also dadurch aus, dass die Sande teilweise durch glasierte, geschlossenzellige, mit Luft gefüllte Kugeln mit einer 3 - 20mal höheren Druckfestigkeit (hydraulisches Messverfahren) als traditionelle, zerrissene, offenzellige Perlite, ersetzt sind. In diesem Fall wird im Minimum 20% des Volumens der Mörtelmischung durch die glasierten, geschlossenzelligen Kugeln ersetzt. Das Restvolumen besteht aus Sanden verschiedener Korngrösse, in idealer Siebelinie gemischt, und aus wenigstens einem Bindemittel.

Das Verfahren zur Herstellung einer solchen Mörtelmischung als Brandschutz ist *dadurch gekennzeichnet,* dass Perlitsand zunächst mittels einer Sieblinie in verschiedene Korngrösse sortiert wird, und jede einzelne Korngrösse anschliessend in einem Rieselkanal mit mehrstufigen Temperaturzonen aufgebläht wird und damit die Oberfläche der Kugeln verglast wird, und schliesslich aus solchermassen erzeugtem, glasierten geblähten Perlit einer oder mehrerer Korngrössen durch Zugabe von Bindemitteln eine homogene Mischung hergestellt wird, die in Bezug auf ihr Volumen zu wenigstens 20% aus diesen verglasten, geschlossenzelligen Kugeln aus expandiertem Silicasand bzw. geblähtem Perlit mit einer Druckfestigkeit von 0.7 - 6.0 N/mm² besteht, und das Restvolumen mindestens aus einem Bindemittel besteht.

Die Verwendung als Oberputz zeichnet sich dadurch aus, dass der Oberputz als pastöse Masse in Kübeln bis 10kg Gewicht abgefüllt auf der Baustelle verfügbar gemacht wird und dort händisch aufgetragen wird. Das ist möglich, da die Dichte des Oberputzes infolge Beigabe des Leichtzuschlags nur 15 25 - 50 % der Dichte eines Oberputzes mit Sandzuschlägen beträgt.

Anhand der Zeichnungen wird das schonungsvolle Pumpen und das Verwenden eines nicht erfindungsgemässen Perlit-Dämmputzes dargestellt. Ausserdem wird nachfolgend die Herstellung des Perlit-Dämmputz und seine Zusammensetzung offenbart und seine Eigenschaften werden diskutiert. Das Aufbringen der Verputzmischung in eine erfindungsgemässe Ausführung als Oberputz erfolgt manuell, wobei hier der sehr grosse Vorteil darin liegt, dass erstens dieser Oberputz nur noch etwa einen Fünftel des Gewichtes eines herkömmlichen Oberputzes für die gleiche Fläche auf die Waage bringt, und zweitens die Dispersion durch den geblähten Perlit nicht aufgesaugt wird, wodurch ein homogenes Auftrages des Oberputzes stark erleichtert wird.

Es zeigt:
- Figur 1 :: Den schematischen Aufbau einer Schneckenpumpe zum Applizieren des Perlit-Oberputzes;
- Figur 2 :: Die Applikation von Perlit-Oberputz auf eine Aussenwand mittels einer Perlit-Oberputz-Pumpanlage.

Rohperlit ist ein chemisch und physikalisch umgewandeltes, vulkanisches Gestein (Obsidin) mit weissem, pudrigem Aussehen. Der rohe Perlit enthält bis 2% Wasser und weist eine Dichte von 900-1'000 kg/m³ auf. Er ist ein natürlicher Baustoff, der sich als Blähperlit hervorragend für die Isolation eignet und der besonders leicht ist. Der Rohstoff entsteht in seismisch aktiven Zonen und wird somit natürlich erneuert, und er ist langfristig verfügbar. Das Produkt ist problemlos rückbaubar und kann zusammen mit anderem mineralischen Baumaterial als üblicher Bauschutt deponiert und allenfalls wiederverwendet werden. Traditioneller Perlit, welcher im herkömmlichen Verfahren gebläht wird, ist offenzellig, stark hygroskopisch und hat eine geringe Druckfestigkeit und ist entsprechend als Mörtelzusatz ungeeignet, den hohen Anforderungen zu genügen. Durch ein mehrstufiges Glühen auf steigenden Temperaturen bis ca. 800°C bis 1'000°C gelingt es, Perlit auf das 10-15fache Volumen aufzublähen. Die Dichte des Blähproduktes beträgt dann bloss noch 80-400 kg/m³. Der geblähte Perlit weist also ein aussergewöhnlich leichtes Gewicht auf. Das Blähen von Perlit ist seit Jahren bekannt. Die bisherige Blähmethode führt aber zu offenzelligen zerrissenen Perliten. Das Verfahren zur Herstellung dieser neuartigen Perlite erfolgt mehrstufig, in einem Fallofen mit mehreren Temperaturzonen. Dabei wird der Perlitsand zunächst mittels einer Sieblinie in verschiedene Korngrösse sortiert. Jede einzelne Korngrösse wird anschliessend in einem Rieselkanal mehreren Temperaturzonen ausgesetzt, die ansteigende Temperaturen aufweisen. Dabei werden die Perlitkörner gebläht und damit die Oberfläche der Kugeln verglast. Übliche in dieser Weise erzeugte Korngrössen bzw. Kugeldurchmesser sind:
- 0.1mm bis 0.5mm
- 0.5mm bis 0.8mm
- 0.8mm bis 1.0mm
- 1.0mm bis 2.0mm

Diese neuartigen, glasierten Kugeln haben eine im Gegensatz zu zerrissenem Perlit sehr geringe Wasseraufnahme-Fähigkeit. Um offenzellige Perlite in Bezug auf die Wasseraufnahmefähigkeit zu verbessern, wurden diese bisher ummantelt, beispielsweise mit Bitumen. Eine andere Variante besteht darin, offenzellige Perlite mit Paraffin zu imprägnieren oder mit Silikon zu veredeln und sie für Schüttungen zu verwenden. Die solchermassen behandelten Perlite eignen sich aber wenig zur Verwendung als Oberputze, denn die Druckfestigkeit dieser Produkte ist nach wie vor gering und beträgt bloss ca. 0.2 N/mm².

Durch Expandieren von Silicasand bzw. durch das Blähen von Perlit entstehen wie erwähnt solche geschlossenen Kugeln. Diese Kugeln unterschiedlichen Durchmessers weisen ein spezifisches Gewicht von bloss ca. 80-400 kg/m³ auf. Sie sind also extrem leicht und enorm wärmeisolierend, mit einem A-Wert von 20 bis 35 mW/mK, und sie weisen eine hohe Druckfestigkeit von 0.8 - 6.0 N/mm² auf und sind somit geeignet zur Herstellung eines Perlit-basierten, nicht erfindungsgemässen Dämmputzes. Dazu werden in Bezug auf sein Volumen zu 75% bis 90% solche glasierten und somit an ihrer Oberfläche geschlossene, mit Luft gefüllte Kugeln aus expandiertem Silicasand bzw. geblähtem Perlit mit Bindemitteln, Zusatzstoffen, einem Luftporenbilder und/oder weiteren chemischen Zusatzmitteln versetzt und homogen gemischt. Ein besonders vorteilhaftes Gemisch ist wie folgt zusammengesetzt:
- 450±25 Liter verglaster, geblähter Perlit der Korngrösse 0.1 mm bis 0.5mm
- 450±25 Liter verglaster, geblähter Perlit der Korngrösse 0.5mm bis 0.8mm
- 120±20 kg Portlandzement als Bindemittel
- 80±20 kg hydraulischer Kalk als weichmachendes Bindemittel
- 200 gr. Zellulose als Zusatzstoff
- 20-60gr. Luftporenbilder
- Chemische Zusatzmittel als Verflüssiger oder Schnellbinder, Polymere und oder andere.

Ein solcher nicht erfindungsgemäser Dämmputz für Gebäudehüllen wiegt je nach spezifischer Zusammensetzung bloss 260 bis 350kg/m³, und bietet nach dem Pumpen über 20 Meter(!) einen λ-Wert von 40-50 mW/mK.

Ein anderes Rezept für solche nicht erfindungsgemässe Mörtelmischungen kann wie folgt aussehen:

| | |
|---|---|
| 8 -22 Volumen% | mineralische Bindemittel sowie reaktive Zusätze auf Zement-, Kalk- oder vulkanischer Basis |
| > 20 Volumen% | verglaste, geschlossenzellige Kugeln mit hoher Druckfestigkeit 0.7 - 5.0 N/mm² |
| 58 - 72 Volumen% | Sande in idealer Siebelinie oder/und spezielle Zuschläge |
| 50 - 300 g | mineralische Zusätze wie Zellulose oder/und andere |
| 20 - 100 g | Luftporenbildner oder Schäumungsmittel |
| Kleine Mengen | Chemische Zusätze wie Verflüssiger oder Beschleuniger, Polymere und oder andere |
| **100 Volumen%** | **Total** |

Bei diesem Rezept ist der Anteil an den verglasten geschlossenzelligen Kugeln geringer, da die Sande nur teilweise ersetzt werden. Auch die Dämmwirkung ist entsprechend tiefer.

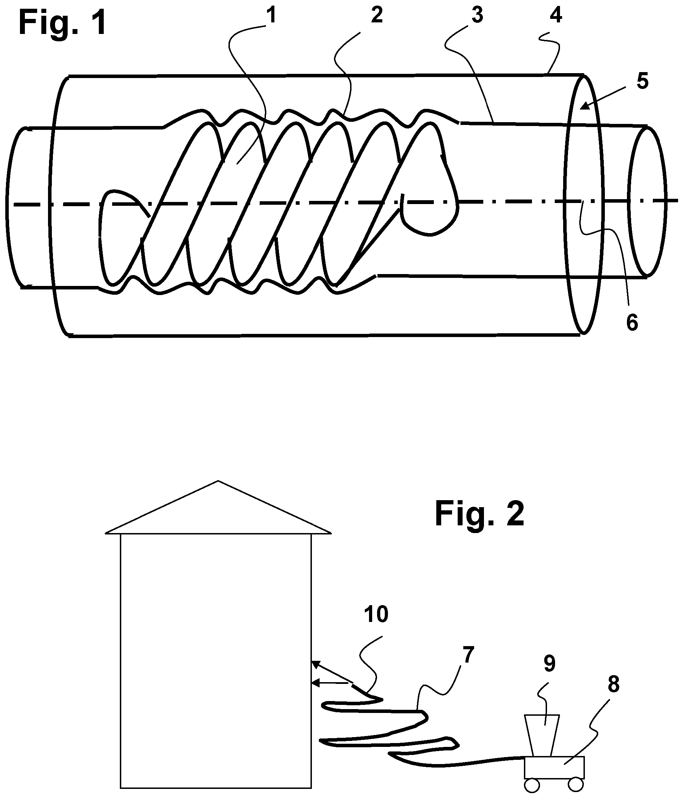

Das Pumpen von traditionellen Perliten oder Aerogelen ist heikel. Wenn der Putz mit einem Druck von 5 bis 20 bar durch den Schlauch einer professionellen Putzmaschine gepumpt wird, so zerstört die mechanische Beanspruchung den traditionellen Perlit oder das Aerogel im Putz. Damit das mit der hier vorgestellten Mörtelmischung mit verglasten, geschlossenzelligen Kugeln nicht auch passiert und ihr hervorragender λ-Wert möglichst erhalten bleibt, muss sie mit einer speziellen Schneckenpumpe gefördert und appliziert werden. Diese Schneckenpumpe ist in Figur 1 schematisch dargestellt und weist einen besonderen Pumpenzylinder 3 auf, indem die Schnecke 1 um die Achse 6 dreht. Der Pumpenzylinder 3 besteht im Bereich 2 der Schnecke 1 aus einem weichelastischen Material. Der Pumpenzylinder 3 ist von einem weiteren druckfesten Rohr 4 umfasst. Der Zwischenraum 5 zwischen Pumpenzylinder 3 und Aussenrohr 4 ist regulierbar mit Luftdruck oder Öldruck beaufschlagbar. Dadurch lässt sich erreichen, dass sich die elastische weiche Wandung des Pumpenzylinders 3 im Bereich der Schnecke 1 an die Aussenränder der Windungen der Schenke 1 anschmiegt und zwischen den Windungen ragt die Zylinderwand gewölbt in das Innere des Pumpenzylinders 3, das heisst sie wölbt sich etwas zwischen die Windungen der drehenden Schnecke 1. Perlit kann an den Aussenrändern der Schneckenwindung nicht zerquetscht werden, denn zuvor gibt die Zylinderwandung 3 elastisch nach. Insgesamt wird der Perlit-Dämmputz in dieser Weise sehr schonend gefördert, sodass auch nach einem Pumpen über 20 Meter und mehr seine Wärmeisolationseigenschaften nur minimal abnehmen.

In Figur 2 ist dargestellt, wie diese Mörtelmischung zur Wärmedämmung und/oder als Brandschutz appliziert wird. Die zu beschichtende Wand wird zuvor für die Verputzaufnahme vorbereitet. Dann wird die Mörtelmischung bzw. der spezielle Oberputz durch einen Trichter 9 in einen Pumpenwagen 8 eingefüllt, in welchem sich eine Schneckenpumpe mit einem weichelastischen, flexiblen, von aussen mit Druck beaufschlagbaren Pumpenzylinder 3 gepumpt wird. Der Oberputz wird vom Pumpenwagen 8 unter Zugabe von Wasser in einem idealen Verhältnis gepumpt, sodass er an der zu beschichtenden Wand haftet. Die Drucke betragen dann bis zu 8 bar und es lassen sich Pumpstrecken von bis zu 20 Metern und mehr überwinden, ohne die Qualität des Oberputzes wesentlich zu verschlechtern. Der applizierte Oberputz bleibt dampfdurchlässig und weist einen λ-Wert von ca. 40 bis 50 mW/mK auf. Es muss daher eine weit weniger starke Schicht aufgespritzt werden als herkömmlich. Es kommt dazu, dass dieser Oberputz deutlich kostengünstiger herstellbar ist als beispielsweise Aerogel-Dämmputz. Dieser Oberputz kann auch zum Einbetten einer Armierung beispielsweise aus Glas dienen. Ein solcher Armierungsputz wird in der Praxis auf alte gerissene Verputze oder auf Dämmplatten auf EPS Basis appliziert. Die so behandelte und beschichtete Wand kann hernach mit einer weiteren Schicht Oberputz auf Dispersionsbasis oder mit einer offenporigen Silikat Farbe abgedeckt werden und der Schichtaufbau bleibt dampfdurchlässig, ist jedoch hoch wärmeisolierend.

Nachfolgend wird ein erfindungsgemässes Beispiel zur Ausführung der Mörtelmischung als Verputzmischung zum Herstellen und zum Applizieren eines Oberputzes angegeben: Es werden 75 - 95 Volumenprozente geblähte geschlossenzellige Perlite mit einem Blähkorndurchmesser von 0.2 bis 2 mm mit Stützkörner vorzugsweise aus Silikatsand mit einem Durchmesser von 0 - 5 mm gemischt. Die Dispersion und weitere Zusätze bilden das Restvolumen der Mischung. Die zusätzlichen Stützkörner sind wichtig, damit die geschlossenzelligen Perlite beim Abreiben der Oberfläche des Dispersionsputzes nicht zerstört werden und entsprechend eine gewünschte Oberflächenstruktur mit sichtbaren Grosskörnern erstellt werden kann. Dank des enorm niedrigen Gewichtes der geblähten Perlite beträgt die Dichte des Fertigproduktes, das heisst des applikationsfähigen Oberputzes im Kessel nur etwa 30% eines herkömmlichen Dispersionsputzes aus Sanden. Ein Kessel mit demselben Volumen ist somit 3 - 4 mal leichter! Anstelle eines 25kg Gebindes wird auf der Baustelle 5 - 9 kg transportiert. Ein wichtiger Vorteil ist auch, dass dieses leichte Oberputz-Material mit viel weniger Aufwand händisch appliziert werden kann. Der Gipser/Maurer hat nur 30% des Gewichtes auf der Kelle und das Abreiben wird viel einfacher und weniger anstrengend. Der leichte Dispersionsputz bleibt viel besser an der Wand haften. Es können entsprechend dickere Schichten aufgetragen werden. Ein schwerer traditioneller Oberputz neigt oft zum Abfliessen, was mit diesem neuartigen Oberputz vermieden wird. Ein weiterer Vorteil besteht darin, dass die geblähten geschlossenzelligen Perlite nicht stark hygroskopisch sind und daher keine Dispersion bzw. Wasseranteile aus der Mischung ziehen. Dispersion, welche im Grundsatz teuer ist, kann somit eingespart werden. Da kein Wasser abgesaugt wird, bleibt das Material länger offen und somit auch länger verarbeitbar.

## Patentansprüche

1. Mörtelmischung als Brandschutz in Form eines Oberputzes, welche in Bezug auf ihr Volumen zu wenigstens 20% aus verglasten, geschlossenzelligen Kugeln aus expandiertem Silicasand bzw. geblähtem Perlit mit einer Druckfestigkeit von 0.7-5.0 N/mm² besteht, und das Restvolumen mindestens aus einem Bindemittel, ***dadurch gekennzeichnet,***
**dass** die Mörtelmischung zum Oberverputzen von Gebäudehüllen in Bezug auf ihr Volumen zu 75% bis 95% aus verglasten, geschlossenzelligen Kugeln aus expandiertem Silicasand bzw. geblähtem Perlit sowie Stützkörnern aus Silikatsanden besteht, und das Restvolumen aus einem Bindemittel in Form einer wässrigen Polymer-Dispersion und weiteren Zusätzen besteht, so dass der Oberputz in pastöser Form vorliegt.

2. Mörtelmischung nach Anspruch 1, ***dadurch gekennzeichnet,* dass** der Anteil an verglasten, geschlossenzelligen Kugeln aus expandiertem Silicasand bzw. geblähtem Perlit eine Korngrösse von 0.2 bis 2 mm aufweist und die Stützkörner aus Silikatsanden eine Körnung von 0 - 5 mm aufweisen und die Dichte des Oberputzes 0.1 - 0.4 kg/l beträgt.

3. Mörtelmischung nach einem der vorangehenden Ansprüche, ***dadurch gekennzeichnet*, dass** sie leichter als 1000 kg/m³ ist und nach dem Pumpen über 20 Meter einen λ-Wert von 40-60 mW/mK aufweist.

4. Verfahren zur Herstellung einer Mörtelmischung nach einem der vorangehenden Ansprüche, wobei Perlitsand zunächst mittels einer Sieblinie in verschiedene Korngrössen sortiert wird, und jede einzelne Korngrösse anschliessend in einem Rieselkanal mit mehrstufigen Temperaturzonen aufgebläht wird und damit die Oberfläche der Kugeln geschlossenzellig und verglast wird, und schliesslich aus solchermassen erzeugtem, glasierten geblähten Perlit einer oder mehrerer Korngrössen durch Zugabe von Bindemitteln eine homogene Mischung hergestellt wird, die in Bezug auf ihr Volumen zu wenigstens 20% aus diesen verglasten, geschlossenzelligen Kugeln aus expandiertem Silicasand bzw. geblähtem Perlit mit einer Druckfestigkeit von 0.7 - 5.0 N/mm² besteht, und das Restvolumen mindestens teilweise aus einem Bindemittel besteht, ***dadurch gekennzeichnet,***
**dass** die Mörtelmischung zum Oberverputzen von Gebäudehüllen in Bezug auf ihr Volumen zu 75 bis 95% aus verglasten, geschlossenzelligen Kugeln aus expandiertem Silicasand bzw. geblähtem Perlit sowie Stützkörnern aus Silikatsanden besteht, und das Restvolumen aus einem Bindemittel in Form einer wässrigen Polymer-Dispersion und weiteren Zusätzen besteht, so dass der Oberputz in pastöser Form vorliegt.

5. Verfahren zur Herstellung einer Mörtelmischung gemäss Anspruch 4, des Weiteren ***dadurch gekennzeichnet,* dass** der Anteil an verglasten, geschlossenzelligen Kugeln aus expandiertem Silicasand bzw. geblähtem Perlit eine Korngrösse von 0.2 bis 2 mm aufweist und die Stützkörner aus Silikatsanden eine Körnung von 0 bis 5 mm aufweisen und die Dichte des Oberputzes 0.1 bis 0.4 kg/l beträgt.

6. Verfahren zur Herstellung einer Mörtelmischung nach Anspruch 5, ***dadurch gekennzeichnet,* dass** glasierter, geblähter Perlit aus einer oder mehreren Korngrössen zwischen 0.1 mm bis 2.0 mm homogen gemischt wird mit einem Bindemittel in Form einer wässrigen Polymer-Dispersion sowie weiteren Zusätzen.

7. Verwendung einer Mörtelmischung nach einem der Ansprüche 1 und 2 als Oberputz durch Auftragen.

## Claims

1. Mortar mixture as fire protection in the form of a finishing plaster, at least 20 % of the volume of which consists of vitrified, closed-cell spheres of expanded silica sand or expanded perlite having a compressive strength of 0.7-5.0 N/mm², and the remaining volume of which consists at least of a binder,
**characterised in that**
the mortar mixture for the top plastering of building envelopes consists of 75 % to 95 % by volume of vitrified, closed-cell spheres of expanded silica sand or expanded perlite and support grains of silicate sands, and the residual volume consists of a binder in the form of an aqueous polymer dispersion and further additives, so that the top plaster is present in pasty form.

2. Mortar mixture according to claim 1, **characterised in that** the proportion of vitrified, closed-cell spheres of expanded silica sand or expanded perlite has a grain size of 0.2 to 2 mm and the supporting grains of silicate sands have a grain size of 0 - 5 mm and the density of the finishing plaster is 0.1 - 0.4 kg/I.

3. Mortar mixture according to one of the preceding claims, **characterised in that** it is lighter than 1000 kg/m³ and has a A-value of 40-60 mW/mK after pumping over 20 metres.

4. Process for the production of a mortar mixture according to one of the preceding claims, wherein perlite sand is first sorted into different grain sizes by means of a grading curve, and each individual grain size is subsequently expanded in a trickling channel with multi-stage temperature zones and the surface of the spheres is thus closed-cell and vitrified, and finally, from glazed expanded perlite of one or more grain sizes produced in this way, a homogeneous mixture is produced by the addition of binding agents, at least 20 % of the volume of which consists of these glazed, closed-cell spheres of expanded silica sand or expanded perlite having a compressive strength of 0.7 - 5.0 N/mm², and the remaining volume consists at least in part of a binder,
**characterised in that**
that the mortar mixture for the top plastering of building envelopes consists of 75 to 95 % by volume of vitrified, closed-cell spheres of expanded silica sand or expanded perlite and support grains of silicate sands, and the residual volume consists of a binder in the form of an aqueous polymer dispersion and other states, so that the top plaster is in paste form.

5. A process for the production of a mortar mixture according to claim 4, further **characterised in that** the proportion of vitrified, closed-cell spheres of expanded silica sand or expanded perlite has a grain size of 0.2 to 2 mm and the supporting grains of silicate sands have a grain size of 0 to 5 mm and the density of the finishing plaster is 0.1 to 0.4 kg/I.

6. A process for the preparation of a mortar mixture according to claim 5, **characterised in that** glazed, expanded perlite of one or more grain sizes between 0.1 mm and 2.0 mm is homogeneously mixed with a binder in the form of an aqueous polymer dispersion and other additives.

7. Use of a mortar mixture according to one of claims 1 and 2 as a finishing plaster by application.

## Revendications

1. Mélange de mortier comme protection contre l'incendie sous la forme d'un enduit de finition, qui est constitué, par rapport à son volume, pour au moins 20 % de billes vitrifiées à cellules fermées de sable de silice expansé ou de perlite expansée ayant une résistance à la compression de 0.7-5.0 N/mm², le volume restant étant constitué au moins d'un liant,
**caractérisé en ce que**
**en ce que** le mélange de mortier pour le crépissage supérieur d'enveloppes de bâtiments est constitué, par rapport à son volume, de 75 % à 95 % de billes vitrifiées à cellules fermées de sable siliceux expansé ou de perlite expansée ainsi que de grains de support en sables siliceux, et le volume restant est constitué d'un liant sous forme d'une dispersion aqueuse de polymère et d'autres additifs, de sorte que le crépi supérieur se présente sous forme pâteuse.

2. Mélange de mortier selon la revendication 1, **caractérisé en ce que** la proportion de billes vitrifiées à cellules fermées de sable de silice expansé ou de perlite expansée présente une granulométrie de 0,2 à 2 mm et les grains de support de sables de silice présentent une granulométrie de 0 à 5 mm et la densité de l'enduit de finition est de 0,1 à 0,4 kg/l.

3. Mélange de mortier selon l'une des revendications précédentes, **caractérisé en ce qu'**il est plus léger que 1000 kg/m³ et présente, après pompage sur 20 mètres, une valeur A de 40 à 60 mW/mK.

4. Procédé de fabrication d'un mélange de mortier selon l'une des revendications précédentes, dans lequel le sable perlitique est d'abord trié en différentes granulométries au moyen d'une ligne de tamisage, et chaque granulométrie individuelle est ensuite soufflée dans un canal de ruissellement avec des zones de température à plusieurs niveaux, et la surface des billes devient ainsi à cellules fermées et vitrifiée, et enfin, à partir de la perlite expansée vitrifiée ainsi produite, d'une ou de plusieurs granulométries, on prépare, par addition de liants, un mélange homogène composé, en volume, d'au moins 20 % de ces billes vitrifiées à cellules fermées de sable de silice expansé ou de perlite expansée. de perlite expansée ayant une résistance à la compression de 0,7 - 5,0 N/mm², et le volume restant est constitué au moins partiellement d'un liant, **caractérisé en ce que**
**en ce que** le mélange de mortier pour le crépissage supérieur d'enveloppes de bâtiments est constitué, par rapport à son volume, de 75 à 95 % de billes vitrifiées à cellules fermées de sable de silice expansé ou de perlite expansée ainsi que de grains de support en sables de silice, et le volume restant est constitué d'un liant sous forme d'une dispersion aqueuse de polymère et d'autres états, de sorte que le crépissage supérieur se présente sous forme pâteuse.

5. Procédé de fabrication d'un mélange de mortier selon la revendication 4, **caractérisé en outre en ce que** la proportion de billes vitrifiées à cellules fermées de sable de silice expansé ou de perlite expansée présente une granulométrie de 0,2 à 2 mm et les grains de support de sables de silice présentent une granulométrie de 0 à 5 mm et la densité de l'enduit de finition est de 0,1 à 0,4 kg/l.

6. Procédé de préparation d'un mélange de mortier selon la revendication 5, **caractérisé en ce que** de la perlite expansée vitrifiée d'une ou plusieurs granulométries comprises entre 0,1 mm et 2,0 mm est mélangée de manière homogène avec un liant sous forme d'une dispersion aqueuse de polymère ainsi que d'autres additifs.

7. Utilisation d'un mélange de mortier selon l'une des revendications 1 et 2 comme enduit de finition par application.
